# EUROPÄISCHE PATENTSCHRIFT

(11) **EP 0 729 377 B1**
(45) Veröffentlichungstag und Bekanntmachung des Hinweises auf die Patenterteilung: **23.09.1998**
(21) Anmeldenummer: 95901366.5
(22) Anmeldetag: 11.11.1994
(51) Int. Cl.: B01D 53/04, B01J 20/20, B01J 20/34

(54) **SIMULTANE SORPTION VON WASSER UND ORGANISCHEN VERBINDUNGEN**
SIMULTANEOUS SORPTION OF WATER AND ORGANIC COMPOUNDS
SORPTION SIMULTANEE D'EAU ET DE COMPOSES ORGANIQUES

(30) Priorität: 19.11.1993 DE 4339500
(43) Veröffentlichungstag der Anmeldung: 04.09.1996
(73) Patentinhaber: Engelhard Process Chemicals GmbH, 31582 Nienburg / Weser (DE)
(72) Erfinder: SCHMIDT, Torsten, D-30169 Hannover (DE); HOFFMEISTER, Michael, D-30173 Hannover (DE)
(74) Vertreter: Grünecker, Kinkeldey, Stockmair & Schwanhäusser Anwaltssozietät
(86) Internationale Anmeldenummer: EP9403729
(87) Internationale Veröffentlichungsnummer: WO9513857

(56) Entgegenhaltungen:
- EP-A- 0 046 141
- EP-A- 0 343 697
- EP-A- 0 369 171
- EP-A- 0 570 847
- DE-A- 3 412 173
- DE-C- 3 743 681
- US-A- 5 110 328

## Beschreibung

Die vorliegende Erfindung betrifft ein Verfahren zur simultanen Sorption von Wasser und organischen Verbindungen aus Prozeßgasen der Maleinsäureanhydrid-Synthese, der Terephthalsäureanhydrid-Synthese und der Phthalsäureanhydrid-Synthese.

Die EP-A-0 570 847 (Veröffentlichungstag: 24.11.93; Anmeldstag: 13.5.93; Priorität der deutschen Patentanmeldung 4 216 867: 22.05.92) beschriebt Sorbenzien, umfassend Aktivkohle in oxidischem Träger. Es wird erwähnt, daß mit diesem Sorbens eine Vielzahl von organischen Stoffen aus Gasen abgetrennt werden kann, beispielsweise aliphatische oder aromatische Kohlenwasserstoffe; man kann auch Lösungsmittel sorbieren, wie sie in der Abluft von Lackierereien oder Druckereien vorkommen. Einem Beispiel kann entnommen werden, daß aus Testgasgemischen, bestehend aus Stickstoff, Toluol und Wasser neben überwiegend Toluol, auch eine geringere Menge Wasser sorbiert werden kann.

Es gebt verschiedenste Gründe, Wasser, CO₂ und organische Verbindungen aus Prozeßgasen abzutrennen. Beispielsweise kann es wünschenswert sein, Wasser und organische Verbindungen aus Abgasen abzutrennen, damit die gereinigten Abgase in die Umwelt entlassen werden können. Es kann auch wünschenswert sein, Wasser und bestimmte organische Bestandteile von Gasen abzutrennen, wenn diese Bestandteile bei der Verwendung des betreffenden Gases in einem technischen Prozeß unerwünscht oder störend sind.

Die simultane Abtrennung von Wasser und organischen Verbindungen, insbesondere von C5+-Kohlenwasserstoffen, d. h. Kohlenwasserstoffen, welche mindestens 5 Kohlenstoffatome enthalten, wurde bislang mit Sorptionsmitteln auf Basis von Siliciumdioxid durchgeführt. Aus Abgasen der Maleinsäureanhydrid-Produktion, der Terephthalsäureanhydrid-Produktion oder der Phthalsäureanhydrid-Produktion wurden derart Wasser und C5+-Kohlenwasserstoffverbindungen abgetrennt.

Die EP-A-0369171 und die EP-A-0343697 beschreiben jeweils ein Sorbens, umfassend partikelförmige Aktivkohle und Aluminiumoxid, das zur Sorption von Wasser und organischen Verbindungen aus Gasen verwendet werden kann.

Die DE-A-3 412 173 beschreibt ein Verfahren zum Regenerieren von Adsorptionsmittel mittels eines Heißluftstromes und Abkühlen mittels eines Trockenluftteilstromes.

Die DE-C-3 743 681 bezieht sich auf ein Verfahren zum Regenerieren eines mit einem Lösemittel beladenden Adsorbers.

Die EP-A-0 046 141 betrifft ein Adsorptionsverfahren zur Entfernung und Rückgewinnung flüchtiger organischer Substanzen aus industriellen Abgasen.

Die US-A-5 110 328 betrifft einen Lösungsmitteladsorber mit Aktivkohle als Hauptkomponente eingebettet in einer monolithischen Wabenstruktur.

Aufgabe der vorliegenden Erfindung ist es, ein verbessertes Verfahren zur simultanen Sorption von Wasser und organischen Verbindungen aus Prozeßgasen der Maleinsäureanhydrid-Synthese, der Terephthalsäureanhydrid-Synthese und der Phthalsäureanhydrid-Synthese bereitzustellen.

Diese Aufgabe wird erfindungsgemäß gelöst mit einem Verfahren zur simultanen Sorption von Wasser und organischen Verbindungen aus Gasen, ausgewählt aus Prozeßgasen der Maleinsäureanhydrid-Synthese, der Terephthalsäureanhydrid-Synthese und der Phthalsäureanhydrid-Synthese, wobei man das Gas mit einem Sorbens kontaktiert, umfassend partikelförmige Aktivkohle in einem oxidischen Träger, und wobei der Träger aus einem Gel hergestellt worden ist.

Bevorzugte Ausführungsformen der Erfindung sind in den beiliegenden Patentansprüchen angegeben.

Das erfindungsgemäße Verfahren zur simultanen Sorption von Wasser und organischen Verbindungen aus dem Zuvorgenannten Gasen sieht vor, daß man das zu behandelnde Gas mit einem Sorbens kontaktiert, umfassend partikelförmige Aktivkohle in einem oxidischen Träger, vorzugsweise auf Basis von Siliciumdioxid, Aluminiumoxid, Aluminiumphosphat oder Alumosilikat. Natürlich kann der oxidische Träger auch Gemische insbesondere dieser genannten Oxide umfassen.

Es können polare und unpolare, hydrophile und hydrophobe, gasförmig oder dampfförmig vorliegende organische Substanzen entfernt werden. Beispielsweise kann man Substanzen sorbieren, die nur aus Kohlenstoff und Wasserstoff aufgebaut sind, beispielsweise aliphatische oder zykloaliphatische Kohlenwasserstoffe, beispielsweise Benzin, oder aromatische Kohlenwasserstoffe wie Benzol, Toluol oder Xylol. Man kann auch Verbindungsklassen sorbieren, die Kohlenstoff sowie Heteroatome wie Stickstoff, Sauerstoff, Halogenatome, Schwefel, Phosphor sowie gegenbenfalls Wasserstoff enthalten. So können CO₂, Halogenkohlenstoffe, Halogenkohlenwasserstoffe, beispielsweise Chlorkohlenstoffe, Chlorkohlenwasserstoffe, Chlorfluorkohlenstoffe, Chlorfluorkohlenwasserstoffe, Fluorkohlenstoffe, Fluorkohlenwasserstoffe, Alkohole, Ketone, Carbonsäureester, Aldehyde, aliphatische cycloaliphatische oder aromatische Ether, Alkylphosphorverbindungen, Alkylschwefelverbindungen entfernt werden.

Bevorzugte Prozeßgase enthalten neben Wasser verdampfbare aliphatische Kohlenwasserstoffverbindungen mit 1 oder mehr Kohlenstoffatoamen,aromatische Kohlenwasserstoffe wie Benzol oder Toluol, Wasserstoff und/oder CO₂.

Der Begriff "Aktivkohle" umfaßt im Rahmen der vorliegenden Erfindung auch Aktivkohle-Ruß, Aktivkohle-Koks und -Graphit, nicht jedoch Aktivkohle-Molekularsieb.

Die Partikelgröße der Aktivkohle liegt zweckmäßig im Bereich von 50 bis 50.000 nm, vorzugsweise im Bereich von 50 bis 10.000 nm.

Der Gehalt an Aktivkohle im Sorbens kann in einem weiten Bereich schwanken, z. B. zwischen 0,1 und 90 Gew.-%, bezogen auf das Gesamtgewicht des Sorbens. Vorzugsweise liegt der Gehalt zwischen 0,5 und 70 Gew.-%, insbesondere zwischen 5 und 40 Gew.-%, ganz besonders bevorzugt zwischen 5 und 30 Gew.-%.

Eine gleichförmige Verteilung der Aktivkohle im Sorbens ist besonders vorteilhaft.

Als oxidischer Träger kann amorphes und/oder kristallines Material verwendet werden. Sehr gut geeignet sind amorphe oxidische Träger, die kristallines Material enthalten können. Besonders gut geeignet zur Anwendung im erfindungsgemäßen Verfahren sind amorphe oxidische Träger auf Basis von Siliciumdioxid oder Alumosilikat.

Kristalline Anteile wie Zeolith oder Aluminiumphosphat können in einer Menge von bis zu 50 Gew.-%, bezogen auf das Gesamtgewicht des Sorbens, enthalten sein.

Das Sorbens kann in beliebiger Form, z. B. als Granulat, Strangpressling oder Monolith vorliegen. Zweckmäßig sind Partikel einer Größe von mindestens 0,1 mm, insbesondere perlförmige Partikel. Der Durchmesser der perlförmigen Partikel liegt vorteilhaft im Bereich von 0,5 bis 10 mm, vorzugsweise im Bereich von 1 bis 6 mm.

Die Herstellung des anwendbaren Sorbens ist in der genannten EP-A-0 570 847 beschrieben. Die Herstellung oxidischer Materialien auf Basis von amorphem oder kristallinem Siliciumdioxid, Aluminiumoxid, Aluminiumphosphat oder Alumosilikat ist bekannt. Kristallines Alumosilikat beispielsweise kann analog dem Verfahren der DE-B-1 038 015 hergestellt werden. Dabei wird Natriumaluminat-Lösung und Natriumsilikat-Lösung unter Gel-Bildung miteinander vermischt und zur Kristallisation gebracht. Je nach Molverhältnis von Silicium und Aluminium können verschiedene Zeolithe erzeugt werden. Das Sorbens kann man herstellen, indem Zeolith, Bindemittel und Aktivkohle gemischt und verfestigt werden, z. B. durch Granulation.

Die Herstellung amorpher Alumosilikate kann analog dem in der DE-A-29 17 313 beschriebenen Verfahren erfolgen. Dabei werden eine Aluminat- und eine Silikat-Lösung vereinigt und sofort in ein Fällöl gegeben. Dabei bilden sich perförmige Körper aus amorphem Alumosilikat. Die Aktivkohle wird eingefällt, indem man entweder der Aluminat- oder der Silikat-Lösung oder beiden Lösungen Aktivkohle zusetzt.

Eine alternative Möglichkeit sieht vor, eine (saure) Aluminiumsulfat-Lösung und eine Silikat-Lösung miteinander zu vereinigen und dabei in amorphes Alumosilikat zu überführen. Auch hier kann einer oder beiden der Lösungen Aktivkohle zugemischt werden. Bei sofortiger Eingabe der miteinander vermischten Lösungen in ein Fällöl erhält man wiederum perlförmige, Aktivkohle enthaltende Körper.

Ein Aktivkohle enthaltendes Sorbens auf Basis von amorphem Siliciumdioxid erhält man durch Einmischen von Aktivkohle enthaltender Silikat-Lösung in eine Säurelösung. Alternativ könnte man auch der Säurelösung Aktivkohle beimischen. Bei Eintropfen in eine Fällöl erhält man wiederum perlförmige Körper.

Zusätzlich zur Aktivkohle kann man auch kristalline Komponenten wie z. B. Zeolithe beimischen.

Auch die Methode der Sprühgelierung kann zur Herstellung von Aktivkohle enthaltenen Sorbenzien eingesetzt werden. Dabei wird ein Aktivkohle enthaltendes Sol in ein Reaktivgas eingesprüht. Der Sprühstrahl reißt unter Tropfenbildung auf, wobei sich kugelförmige Partikel bilden, die sich im Reaktionsgas verfestigen und gelieren. Beispielsweise kann man ein metastabiles saures Aluminiumoxid-Sol mit Aktivkohle versetzen und in Ammoniakgas einsprühen.

Anschließend kann man übliche weitere Schritte durchführen wie Altern, Basenaustausch, Waschen, Entionisieren, Trocknen oder Tempern. Besonders vorteilhafte Sorbenzien erhält man, wenn man das gefällte oxidische Material nach dem Altern, aber vor dem Basenaustausch trocknet.

Im folgenden wird nun die Anwendung des Aktivkohle enthaltenden Sorbens zur simultanen Sorption von Wasser und organischen Verbindungen aus Gasen erläutert.

Eine Ausführungsform sieht vor, simultan Wasser und höhersiedende Kohlenwasserstoffe, vorzugsweise C5+-Kohlenwasserstoffe, aus dem zu behandelnden Gas abzutrennen. Mit dieser Behandlung ist einerseits eine Reinigung des Gases möglich, andererseits wird verhindert, daß bei etwaigen Temperaturabsenkungen und/oder Druckänderungen des Gases Wasser oder die genannten höhersiedenden Kohlenwasserstoffe kondensieren. Es erfolgt also eine Taupunktserniedrigung des Gases in bezug auf Wasser und die genannten Kohlenwasserstoffe. Zur simultanen Abtrennung von Wasser und C5+-Kohlenwasserstoffen kontaktiert man das Aktivkohle enthaltende Sorbens und das Gas oder das Sorbens und einen zu behandelnden Gasstrom mindestens 20 Minuten lang. Generell kann man bei erniedrigtem Druck, Umgebungsdruck und erhöhtem Druck arbeiten. Vorzugsweise kontaktiert man bei Drücken von 1 bis 150 bar.

Die Sorption von Wasser und den genannten höhersiedenden Kohlenwasserstoffen erfolgt zweckmäßig bei einer Temperatur im Bereich von 0 bis 50 °C (Temperaturwechsel-Regenerierung), die Desorption bei einer Temperatur von 150 bis 350 °C. Dabei kann man die Desorption mit erhitzten Gasen, beispielsweise Luft oder Inertgasen wie Stickstoff, durchführen. Das im Regeneriergas enthaltene Wasser und die höhersiedenden Kohlenwasserstoffe können durch Abkühlen des Regeneriergases auskondensiert und dann abgetrennt werden. Vorzugsweise geht man so vor, daß man als Regeneriergas einen Teilstrom des zu behandelnden Gases verwendet, welcher erhitzt auf eine Temperatur von 150 bis 300 °C durch das beladene Sorbens durchgeleitet wird, wobei sich das Regeneriergas dabei mit dem Desorbat belädt, man das mit dem Desorbat beladene Regeneriergas unter Kühlung vom Desorbat befreit, indem das Desorbat kondensiert wird, und das vom Desorbat befreite Regeneriergas dem zu behandelten oder dem zu behandelnden Gas (bzw. Gasstrom) beigemischt wird.

Bei der vorstehend beschriebenen Ausführungsform können natürlich auch Gase behandelt werden, welche Kohlenwasserstoffe enthalten, die weniger als 5 Kohlenstoff-Atome aufweisen. Diese leichtersiedenden Kohlenwasserstoffe werden dann nicht oder nur in ganz geringem Umfang sorbiert.

Eine andere Ausführungsform der Erfindung gestattet die simultane Abtrennung von Wasser, CO₂ und C2+-Kohlenwasserstoffen. Hierzu wird das zu behandelnde Gas für eine verhältnismäßig kurze Zeitdauer, insbesondere höchstens 15 Minuten lang, mit dem Aktivkohle enthaltenden Sorbens kontaktiert. Danach erfolgt zunehmende Verdrängung des CO₂ bzw. der niedrig siedenden Kohlenwasserstoffe durch höhersiedende Substanzen. Die Temperatur bei der Sorption liegt vorzugsweise im Bereich von 0 bis 50 °C, die Temperatur der Desorption im Bereich von 0 bis 50 °C. Zweckmäßig wird die Desorption dadurch bewirkt, daß man die Temperatur des Sorbens konstant hält, aber den Druck absenkt (Druckwechsel-Regenerierung).

Mit dieser Verfahrensvariante können selbstverständlich auch Gase behandelt werden, die höhersiedende Kohlenwasserstoffe wie beispielsweise C5+-Kohlenwasserstoffverbindungen aufweisen. Diese Kohlenwasserstoffverbindungen werden bei der vorstehend beschriebenen kurzzeitigen Behandlung, bei welcher Wasser und C2+-Kohlenstoffverbindungen bis hin zu Verbindungen mit 4 Kohlenstoffatomen sorbiert werden, nur in geringem Umfang oder gar nicht sorbiert.

Die abgetrennten Kohlenwasserstoffe können als Benzinersatz oder als Brenngase eingesetzt werden.

Wie gesagt, kann das Sorbens regeneriert werden. Im einfachsten Fall kann man so vorgehen, daß man ein erhitztes Regeneriergas, beispielsweise erhitzte Luft, durch die Schüttung mit dem beladenen Sorbens durchleitet, das mit dem Desorbat beladene Regeneriergas abkühlt, wobei sich Wasser und kondensierbare organische Verbindungen abscheiden, und das Regeneriergas einer Nachbehandlung zuführt, um restliche, verbliebene organische Vebindungen abzutrennen. Das derart gereinigte Regeneriergas kann dann in die Umgebung abgelassen werden.

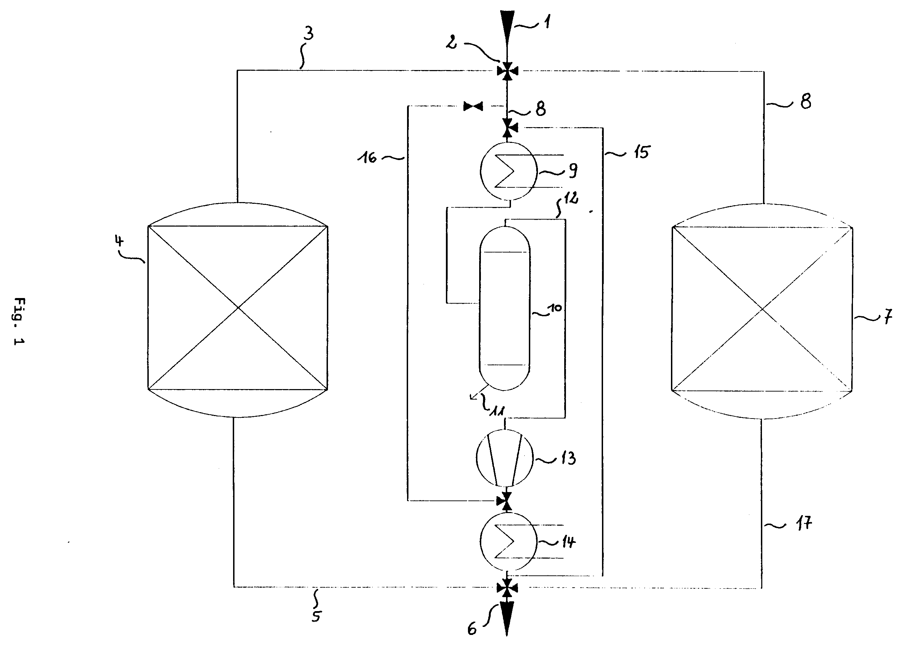

Eine bevorzugte Ausführungsform sieht vor, daß man das Regeneriergas in einem geschlossenen Kreislauf führt. Diese Ausführungsform der Erfindung wird an Hand der Figur 1 weiter erläutert.

Das zu behandelnde Gas wird über die Leitung 1 zugeführt. Über das Mehrwegeventil 2 und die Leitung 3 wird das Gas in den auf Sorption geschalteten Absorber 4 geleitet, worin sich eine Schüttung des Aktivkohle und amorphes SiO₂ umfassenden Sorbens befindet. Die durch den Kontakt mit dem Sorbens gereinigten Gase verlassen den Absorber 4 über die Leitung 5 und können über die Leitung 6 in die Umwelt entlassen werden. Währenddessen wird der beladene Absorber 7 regeneriert. Hierzu wird ein Regeneriergas (beispielsweise ein Inertgas wie Stickstoff oder ein Teilstrom des zu behandelnden oder des behandelten Gases) über die Leitung 16 in den Wärmetauscher 14 geleitet und dort erhitzt. Das erhitzte Gas wird über die Leitung 17 in den Absorber 7 geleitet und desorbiert das von der Sorbensschüttung sorbierte Wasser und organische Substanzen. Das mit Desorbat beladene Gas verläßt den Absorber 7 über die Leitung 8, wird über das Mehrwegeventil 2 in den Wärmetauscher 9 geleitet und dort gekühlt, das gekühlte Gas wird dann in den Kondensator 10 eingeleitet. Das sich dort abscheidende Kondensat wird über die Leitung 11 aus dem Kondensator 10 abgeleitet. Wasser und organische Bestandteile können in einem Phasentrenner getrennt werden. Die organischen Bestandteile können als Brennstoffzusatz oder Treibstoffzusatz eingesetzt werden. Der restliche Gasstrom verläßt den Kondensator 10 über die Leitung 12 und wird über eine Pumpe 13 in den Wärmetauscher 14 geleitet, dort erhitzt und über die Leitung 17 wieder in den zu regenerierenden Absorber 7 geleitet. Wenn der Absorber 4 beladen ist und der Absorber 7 regeneriert ist, wird das Mehrwegeventil umgeschaltet. Das zu behandelnde Gas aus der Leitung 1 wird nunmehr über die Leitung 8 durch den regenerierten Absorber 7 geleitet, aus dem das gereinigte Gas über die Leitung 17 und die Leitung 6 in die Umwelt entlassen wird. Währenddessen wird der Absorber 4 analog der Regeneration des Absorbers 7 mit Regeneriergas behandelt, das über die Leitung 5 in den Absorber 4 eingeleitet wird. Somit wird bei dieser Ausführungsform das Regeneriergas im Kreislauf geführt. Dabei kann man so vorgehen, daß man es gewünschtenfalls nur zu Beginn des Regenerierens im Wärmetauscher 14 erhitzt.

Insbesondere bei Anwendung von 2 im Wechselbetrieb betriebenen Absorbern ist die vorstehend beschriebene Regenerierung mit der Kreislaufführung des Regeneriergases bevorzugt. Natürlich kann man auch ständig oder zeitweise einen Teilstrom des zu behandelnden oder des behandelten Gases im Bypass führen.

Insbesondere bei Anwendung von mindestens 3 Absorbern, die im Wechselbetrieb eingesetzt werden, ist es besonders vorteilhaft, einen Teilstrom des zu behandelnden oder des behandelten Gases zeitweilig oder ständig im Bypass am jeweils zur Sorption verwendeten Absorber vorbeizuführen und zur Regenerierung des jeweils zu regenerierenden Absorbers zu verwenden. Dabei geht man zweckmäßig so vor, daß ein Absorber auf Sorption geschaltet ist, ein Absorber bereits regeneriert ist und durch das Regeneriergas durchströmt und gekühlt wird und ein weiterer Absorber durch erhitztes Regeneriergas regeneriert wird. Hierbei gibt es verschiedene zweckmäßige Varianten.

Bei dieser Ausführungsform sind mindestens 3 Absorber A, B und C vorhanden, wobei der Absorber A auf Sorption geschaltet ist, der Absorber B bereits regeneriert vorliegt und sich im von der Regenerierung noch heißen Zustand befindet und der Absorber C regeneriert werden soll; das zu behandelnde Gas wird also durch den Absorber A geleitet. Eine Variante I sieht vor, daß man einen Teilstrom des zu behandelnden Gases zunächst durch den Absorber B leitet und den, den Absorber B verlassenden Gasstrom erhitzt und durch den zu regenerierenden Absorber C leitet, dann den, den Absorber C verlassenden Gasstrom der mit Desorbat angereichert ist, kühlt, auskondensierende organische Verbindungen (und auskondensierendes Wasser) und den nicht kondensierende Bestandteile aufweisenden restlichen Gasstrom durch den Absorber A leitet.

Eine Variante II sieht vor, daß man einen Teilstrtom des zu behandelnden Gases zunächst erhitzt und durch den Absorber C leitet, dann den, den Absorber C verlassenden Gasstrom, der mit Desorbat angereichert ist, abkühlt, auskondensierende organische Bestandteile (und auskondensierendes Wasser) abtrennt, den nicht kondensierende Bestandteile aufweisende Gasstrom durch den Absorber B leitet, der dabei gekühlt wird, und den, den Absorber B verlassenden Gasstrom dem zu behandelnden Gas zwecks Durchleitung durch den Absorber A beimischt.

Eine dritte Variante sieht vor, daß man einen Teilstrom des zu behandelnden Gases erhitzt und durch den Absorber C leitet, den den Absorber C verlassenden, mit Desorbat angereicherten Gasstrom abkühlt, auskondensierende organische Verbindungen (und auskondensierendes Wasser) abtrennt und den restlichen Gasstrom zwecks Durchleitung durch den Absorber A dem zu behandelnden Gas beimischt. Bei dieser Variante III wird zusätzlich ein Teilstrom des den Absorber A verlassenden Gases durch den Absorber B geleitet, welcher dabei abgekühlt wird, und der, den Absorber B verlassende Gasstrom dem Hauptstrom des behandelten Gases beigemischt.

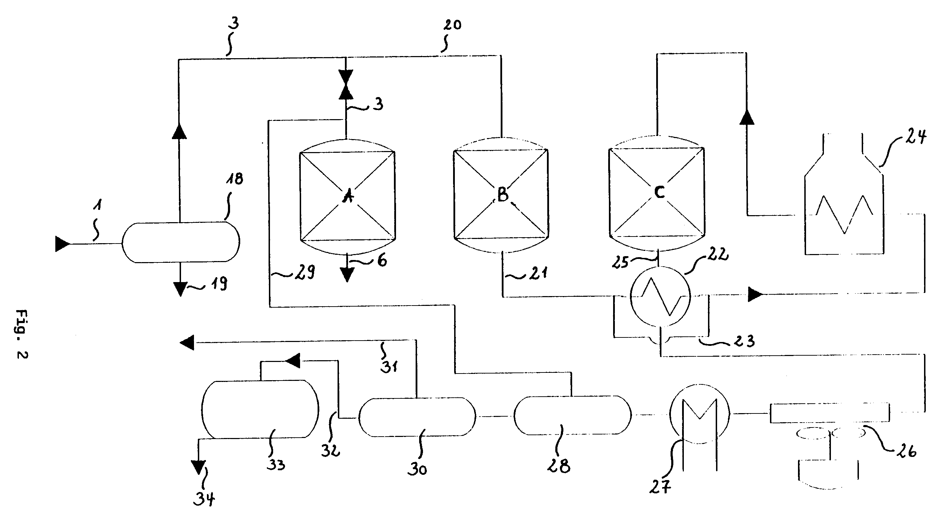

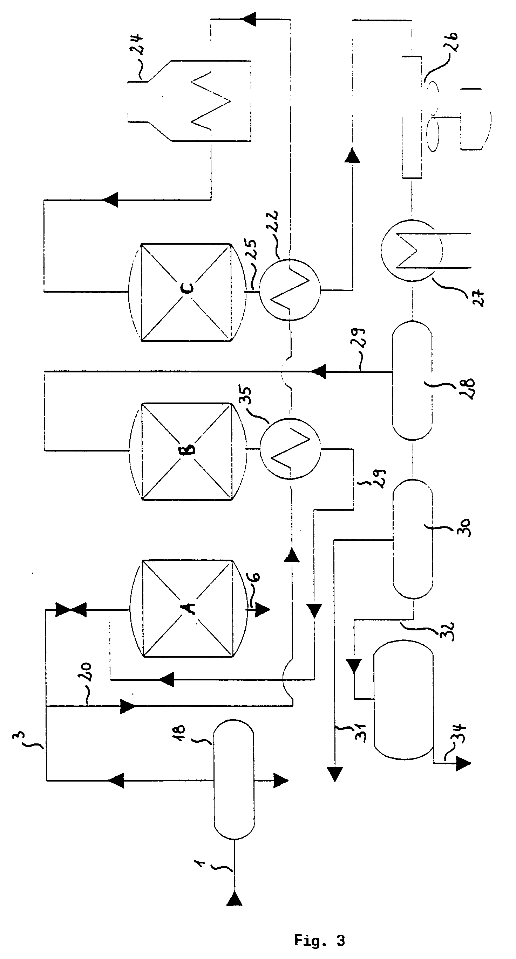

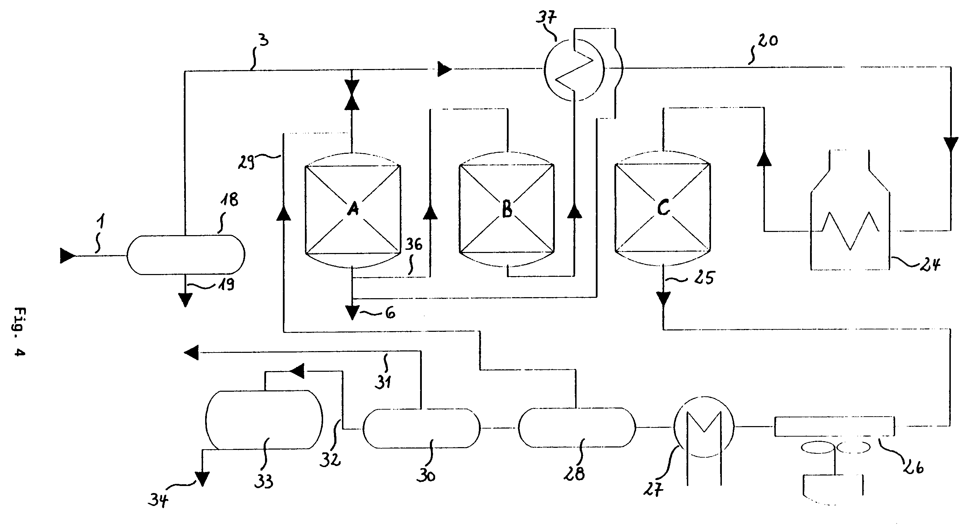

Die Figur 2 erläutert die Variante I. Das gezeigte Schema umfaßt einige Bauteile (Vorkondensator, Luftkühler, 2-stufiger Kondensator), die für die Durchführung der Variante nicht unbedingt notwendig sind, sich aber als besonders vorteilhaft bei der technischen Anwendung erwiesen haben (das gleiche gilt für die später noch zu erläuternden Varianten II und III und die zugehörigen Figuren 3 und 4). Das zu behandelnde Gas wird über die Leitung 1 in den Vorkondensator 18 eingeleitet. Auskondensierende Bestandteile können über die Leitung 19 abgezogen werden. Der restliche Gasstrom wird über die Leitung 3 in den auf Absorption geschalteten Absorber A geleitet und das gereinigte Gas über die Leitung 6 in die Umwelt entlassen oder einer technischen Verwendung zugeführt. Ein Teilstrom des zu behandelnden Gases wird der Leitung 3 über die Leitung 20 entnommen und durch den frisch regenerierten, noch erhitzten Absorber B geleitet, der sich dabei abkühlt. Das den Absorber B im wesentlichen unverändert verlassende Gas wird über die Leitung 21, gewünschtenfalls durch den Wärmetauscher 22 oder teilweise oder vollständig über die Bypass-Leitung 23 in einen Erhitzer 24 eingeleitet. Die den Erhitzer verlassenden Gase passieren die Sorbensschüttung des zu regenerierenden Absorber C. Die mit Desorbat beladenen Gase verlassen den Absorber C über die Leitung 25, passieren den Wärmetauscher 22 und werden im Luftkühler 26 vorgekühlt. Anschließend passieren sie den Kühler 27 und werden dann in den Hochdruckkondensator 28 eingeleitet. Der geringe Anteil an unter Hochdruck nicht kondensierenden Bestandteilen im Desorbat enthaltenen Gasstrom wird über die Leitung 29 in die Leitung 3 zwecks Behandlung im Absorber A beigemischt. Das Kondensat des Hochdruckkondensators 28 wird in den Niederdruckkondensator 30 eingeleitet. Nicht kondensierende Bestandteile, beispielsweise niedrigsiedende Kohlenwasserstoffe, werden über die Leitung 31 abgeführt und können als Brenngase eingesetzt werden. Das Kondensat des Kondensators 30 wird über die Leitung 32 in den Vorratstank 33 eingeleitet. Die Kohlenwasserstoffe dienen beispielsweise als Treibstoffzusatz und können über die Leitung 34 aus dem Vorratstank entnommen werden.

Figur 3 erläutert die Variante II. Das zu behandelnde Gas wird wie bei der Variante I über die Leitung 1 in den Vorkondensator 18 geleitet und über die Leitung 3 durch den auf Sorption geschalteten Absorber A geleitet. Die gereinigten Gase verlassen den Absorber über die Leitung 6. Ein Teilstrom des zu behandelnden Gases wird über die Leitung 20 durch die Wärmetauscher 35 und 22 in den Erhitzer 24 geleitet. Die den Erhitzer 24 verlassenden heißen Gase werden durch den zu regenerierenden Absorber C geleitet. Die mit Desorbat beladenen Gase verlassen den Absorber C über die Leitung 25 und werden über den Luftkühler 26 und den Kühler 27 in den Hochdruckkondensator 28 eingeleitet. Der nicht kondensierende Teil des Gases wird aus dem Hochdruckkondensator 28 über die Leitung 29 in den frisch regenerierten, noch erhitzten Absorber B geleitet. Die im wesentlichen unveränderten, etwas abgekühlten Gase werden über den Wärmetauscher 35 dann dem zu behandelnden Gasstrom in der Leitung 3 zwecks Behandlung im Absorber A beigemischt. Das Kondensat des Hochdruckkondensators 28 wird dann wie in Variante I beschrieben weiterbehandelt.

Die Figur 4 erläutert die Variante III. Auch hier wird das zu behandelnde Gas über die Leitung 1 und den Vorkondensator 18 sowie die Leitung 3 durch den auf Absorption geschalteten Absorber A geleitet und die gereinigten Gase über die Leitung 6 in die Umwelt entlassen. Ein Teilstrom des zu behandelnden Gases wird aus der Leitung 3 entnommen und über die Leitung 20 zunächst in den Erhitzer 24 geleitet. Die erhitzten Gase, die den Erhitzer 24 verlassen, werden durch den zu regenerierenden Absorber C geleitet. Die mit Desorbat angereicherten Gase verlassen den Absorber C über die Leitung 25 und werden durch den Luftkühler 26 und den Wärmetauscher 27 wiederum zunächst in den Hochdruckkondensator 28 eingeleitet. Die nicht kondensierenden Bestandteile des Gasstroms werden über die Leitung 29 dem zu behandelnden Gas beigemischt. Das Kondensat des Kondensators 28 wird wie in Variante 1 beschrieben weiterbehandelt. Die Kühlung des frisch regenerierten, noch erhitzten Absorbers B erfolgt bei dieser Variante durch einen Teilstrom des behandelten Gases aus Leitung 6, welcher über die Leitung 36 durch den Absorber B geleitet wird, der sich dabei abkühlt. Das bereits etwas abgekühlte Gas wird über den Wärmetauscher 37 geleitet und dann dem Gasstrom in Leitung 6 wieder beigemischt.

Vorteil des erfindungsgemäßen Verfahrens ist es, daß simultan und selektiv entweder Wasser und C5+-Kohlenwasserstoffverbindungen oder simultan Wasser und CO₂ bzw.C2+-Kohlenwasserstoffverbindungen sorbiert werden können. Es hat sich sogar erwiesen, daß die verwendete Aktivkohle besonders gut zur Sorption ausgenutzt wird. So weist die fünffache Menge reiner Aktivkohle lediglich 50 % mehr Kapazität auf! Anlagen können deshalb kleiner ausgelegt werden. Weiterer Vorteil ist die erleichterte Desorption und die stark verringerte Entflammbarkeit der verwendeten Aktivkohle.

Die folgenden Beispiele sollen die Erfindung weiter erläutern, ohne sie in ihrem Umfang einzuschränken.

Die Beispiele 1 bis 11 beschreiben die Herstellung des Aktivkohle enthaltenen Sorbens, das Beispiel 12 die Anwendung zur simultanen Sorption von Wasser und bestimmten Kohlenwasserstoffverbindungen bzw. CO₂.

### Beispiele 1 bis 11:

### Herstellung von Aktivkohle und gegebenenfalls kristallines weitporiges SiO₂ enthaltenden Sorbenzien auf Basis von amorphen SiO₂

### Allgemeine Herstellvorschrift:

Als Quelle für das amorphe SiO₂ wurde eine Natriumsilikat-Lösung mit 6,30 Gew.-% Na₂O und 21,16 Gew.-% SiO₂ und einer Dichte von d₂₀= 1,256 eingesetzt. Aktivkohle oder Graphit sowie gegebenenfalls weitporiges SiO₂ (feinteilige Partikel, Porendurchmesser 20 bis 30 Å) wurden der Natriumsilikat-Lösung in Form einer wäßrigen Suspension (Maische) beigemischt. Die Fällung erfolgte durch Vermischen mit einer sauren Lösung, die eine wäßrige Schwefelsäure mit einer Konzentration von 7,87 Gew.-% H₂SO₄ und einer Dichte von d₂₀= 1,049 war. Beim Vermischen der alkalischen und der sauren Lösung stellte sich ein pH-Wert von 6,9 ein. Das Gemisch wurde sofort in ein Fällöl eingegeben und die entstandenen Perlen, gegebenenfalls nach Altern, bis zur Sulfatfreiheit gewaschen. Dann erfolgte ein Basenaustausch, indem man die Perlen 5 mal je 3 Stunden lang mit 0,5 Gew.-% H₂SO₄ enthaltender Schwefelsäure kontaktierte. Es wurde dann 3,5 Stunden lang bei 180 °C mit Dampf in einem Umlufttrockner getrocknet. Anschließend wurde getempert. In Beispiel 5 wurde nach dem Altern getrocknet und die getrockneten perlförmigen Körper einem Basenaustausch unterworfen, indem sie fünfmal 3 Stunden lang mit Schwefelsäure eine Konzentration von 0,5 Gew.-% H₂SO₄ kontaktiert wurden und dann bis zur Sulfatfreiheit gewaschen wurden. In Beispiel 1 wurde statt Schwefelsäure 0,5 Gew.-% Al₂(SO₄)₃-Lösung verwendet.
Die Verfahrensparameter und Eigenschaften der erhaltenen Sorbenzien sind in der folgenden Tabelle 1 zusammengefaßt.

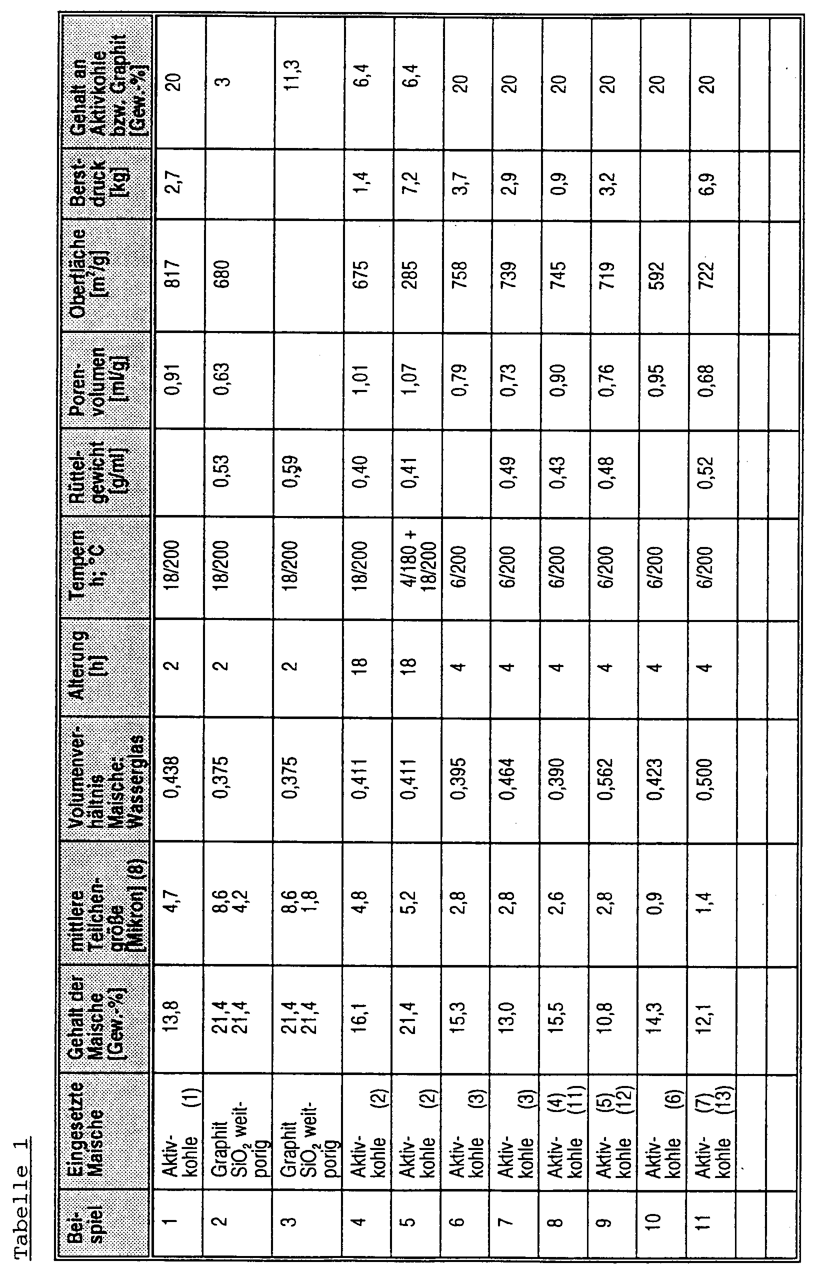

| Erläuterungen zu Tabelle 1: | |
|---|---|
| (1) Produkt Lurgi AS 4/420^{R} | (8) d₅₀, bestimmt nach der Cilas Methode (1 Mikron = 1 µm) |
| (2) A-Kohle Riedel 18003 ^{R} | |
| (3) Norit P1^{R}, American Norit Co. | |
| (4) Lurgi Carbopol SC 44/1^{R} | |
| (5) Lurgi Gn-A^{R} | (11) Schüttgewicht: 0,40 g/ml |
| (6) Degussa Flammruß^{R} | (12) Schüttgewicht: 0,45 g/ml |
| (7) Norit SA 1^{R} | (13) Schüttgewicht: 0,48 g/ml |

### Beispiel 12:

### Reinigung von Abgasen der Phtalsäureanhydrid-Synthese

Abgase der Phtalsäureanhydrid-Synthese enthalten üblicherweise geringere Mengen para-Xylol, Methylacetat, Methylbromid, Essigsäure, größere Mengen an Wasser, Sauerstoff und Kohlendioxid und sehr große Mengen an Stickstoff. Ein solches Abgas wurde über eine Schüttung eines Sorbens umfassend 20 Gew.-% Aktivkohle in SiO₂ (Produkt AK 20 der Solvay Catalysts GmbH) geleitet. Dabei wurde die Menge an Sorbens so ausgelegt, daß pro Liter Sorbat etwas 6 kg Sorbens eingesetzt wurden. Der Druck betrug etwa 16 bis 20 bar, die Temperatur ungefähr 47 °C, die Zeitdauer der Abscheidung betrug 0,35 Stunden. Das den Adsorber verlassende Gas enthielt nur noch 50 ppm p-Xylol, Methylacetat und Essigsäure sowie 350 ppm H₂O.

## Patentansprüche

1. Verfahren zur simultanen Sorption von Wasser und organischen Verbindungen aus Prozeßgasen der Maleinsäureanhydrid-Synthese, der Terephthalsäureanhydrid-Synthese oder der Phthalsäureanhydrid-Synthese, wobei man das Gas mit einem Sorbens kontaktiert, umfassend partikelförmige Aktivkohle in einem oxidischen Träger, und wobei der Träger aus einem Gel hergestellt worden ist.

2. Verfahren nach Anspruch 1, dadurch gekennzeichnet, daß die Aktivkohle in Form von Partikeln mit einer Größe von 50 bis 10.000 nm vorliegt.

3. Verfahren nach Anspruch 1 oder 2, dadurch gekennzeichnet, daß die Aktivkohle in einer Menge von 0,5 bis 70 Gew.-%, vorzugsweise 5 bis 40 Gew.-%, bezogen auf das Gesamtgewicht des Sorbens, im Sorbens enthalten ist.

4. Verfahren nach einem der vorhergehenden Ansprüche, dadurch gekennzeichnet, daß der Träger aus amorphem Siliciumdioxid besteht und vorzugsweise perlförmig ist.

5. Verfahren nach einem der vorhergehenden Ansprüche, dadurch gekennzeichnet, daß man zur simultanen Abtrennung von Wasser und C5+-Kohlenwasserstoffen das Sorbens und das zu behandelnde Gas oder das Sorbens und den zu behandelnden Gasstrom mindestens 20 Minuten lang kontaktiert.

6. Verfahren nach Anspruch 5, dadurch gekennzeichnet, daß man bei einem Druck von 0.1 bis 15 MPa (1 bis 150 bar) arbeitet.

7. Verfahren nach Anspruch 5 oder 6, dadurch gekennzeichnet, daß man bei einer Temperatur von 0 bis 50 °C sorbiert und bei einer Temperatur von 100 bis 350 °C regeneriert.

8. Verfahren nach Anspruch 7, dadurch gekennzeichnet, daß man die Regenerierung unter Durchleiten eines auf eine Temperatur von 150 bis 300 °C erhitzten Regeneriergases durchführt, wobei es sich bei dem Regeneriergas um einen Teilstrom des zu behandelnden Gases handelt, welcher bei der Regeneration mit dem Desorbat beladen wird, man das mit dem Desorbat beladene Regeneriergas unter Kühlung durch Kondensation vom Desorbat befreit und das vom Desorbat befreite Regeneriergas dem zu behandelnden oder behandelten Gas zumischt.

9. Verfahren nach einem der Ansprüch 1 bis 4, dadurch gekennzeichnet, daß man zur simultanen Abtrennung von Wasser und C2+-Kohlenwasserstoffen das Sorbens und das Gas oder das Sorbens und den zu behandelnden Gasstrom höchstens 15 Minuten lang kontaktiert.

10. Verfahren nach Anspruch 9, dadurch gekennzeichnet, daß man bei einer Temperatur von 0 bis 50 °C sorbiert und bei einer Temperatur von 0 bis 50 °C desorbiert.

11. Verfahren nach Anspruch 10, dadurch gekennzeichnet, daß man bei einem Druck von 0.1 bis 10 MPa (1 bis 100 bar) sorbiert und bei einem Druck von 10 kPa bis 1 MPa (0,1 bis 10 bar) desorbiert.

12. Verfahren nach einem der Ansprüche 7 bis 11, dadurch gekennzeichnet, daß man das Regeneriergas im geschlossenen Kreislauf führt.

13. Verfahren nach einem der Ansprüche 7 bis 11, dadurch gekennzeichnet, daß man das Regeneriergas im Bypass führt.

14. Verfahren nach einem der Ansprüche 7 bis 11, dadurch gekennzeichnet, daß man mindestens 3 Absorber A, B und C vorsieht, wobei der Absorber A sich im Absorptionszyklus befindet, der Absorber B sich im von der Regenerierung erhitzten Zustand befindet, der Absorber C regeneriert werden soll und man das zu behandelnde Gas durch den Absorber A leitet, wobei man entweder
a) einen Teilstrom des zu behandelnden Gases zunächst durch den Absorber B leitet und den, den Absorber B verlassenden Gasstrom erhitzt und durch den zu regenerierenden Absorber C leitet, dann den, den Absorber C verlassenden Gasstrom, der mit Desorbat angereichert ist, kühlt, auskondensierende organische Verbindungen abtrennt und den nicht kondensierende Bestandteile aufweisenden restlichen Gasstrom durch den Absorber A leitet, oder
b) einen Teilstrom des zu behandelnden Gases zunächst erhitzt und durch den Absorber C leitet, dann den, den Absorber C verlassenden Gasstrom, der mit Desorbat angereichert ist, abkühlt, auskondensierende organische Bestandteile abtrennt, den nicht kondensierende Bestandteile aufweisenden Gasstrom durch den Absorber B leitet und den, den Absorber B verlassenden Gasstrom dem zu behandelnden Gas zwecks Durchleitung durch den Absorber A beimischt, oder
c) einen Teilstrom des zu behandelnden Gases erhitzt und durch den Absorber C leitet, den den Absorber C verlassenden, min Desorbat angereicherten Gasstrom abkühlt, auskondensierende organische Verbindungen abtrennt und den restlichen Gasstrom zwecks Durchleitung durch den Absorber A dem zu behandelnden Gas beimischt, und einen Teilstrom des den Absorber A verlassenden Gases durch den Absorber B leitet und den, den Absorber B verlassenden Gasstrom dem Hauptstrom des behandelten Gases beimischt.

## Claims

1. A process for the simultaneous sorption of water and organic compounds from process gases of maleic acid anhydride synthesis, terephthalic acid anhydride synthesis or phthalic acid anhydride synthesis, wherein the gas is contacted with a sorbent comprising particulate activated carbon in an oxidic carrier, and wherein said carrier has been made from a gel.

2. A process according to claim 1, characterized in that the activated carbon is present in the form of particles having a size of from 50 to 10,000 nm.

3. A process according to claim 1 or 2, characterized in that the activated carbon is contained in the sorbent in an amount of from 0.5 to 70% by weight, preferably 5 to 40% by weight, based on the total weight of said sorbent.

4. A process according to one of the preceding claims, characterized in that the carrier consists of amorphous silicon dioxide and is preferably beaded.

5. A process according to one of the preceding claims, characterized in that, for simultaneously separating water and C5+ hydrocarbons, the sorbent and the gas to be treated or the sorbent and the gas stream to be treated are contacted for a period of at least 20 minutes.

6. A process according to claim 5, characterized in that the treatment is carried out at a pressure of from 0.1 to 15 MPa (1 to 150 bar).

7. A process according to claim 5 or 6, characterized in that sorption is carried out at a temperature of from 0 to 50°C and that regeneration is carried out at a temperature of from 100 to 350°C.

8. A process according to claim 7, characterized in that regeneration is carried out by passing through a regeneration gas heated to a temperature of from 150 to 300°C, the regeneration gas being a split stream of the gas to be treated, said split stream being charged with the desorbate during regeneration, the regeneration gas charged with the desorbate being cooled and freed from said desorbate by condensation, whereupon the regeneration gas, which no longer contains any desorbate, is admixed to the gas to be treated or the gas which has been treated.

9. A process according to one of the claims 1 to 4, characterized in that, for simultaneously separating water and C2+ hydrocarbons, the sorbent and the gas or the sorbent and the gas stream to be treated are contacted for a period which does not exceed 15 minutes.

10. A process according to claim 9, characterized in that sorption is carried out at a temperature of from 0 to 50°C, and that desorption is carried out at a temperature of from 0 to 50°C.

11. A process according to claim 10, characterized in that sorption is carried out at a pressure of from 0.1 to 10 MPa (1 to 100 bar), and that desorption is carried out at a pressure of from 10 kPa to 1 MPa (0.1 to 10 bar).

12. A process according to one of the claims 7 to 11, characterized in that the regeneration gas is circulated in a closed circuit.

13. A process according to one of the claims 7 to 11, characterized in that the regeneration gas is guideded in a bypass.

14. A process according to one of the claims 7 to 11, characterized in that at least three absorbers A, B and C are provided, absorber A being in the absorption cycle, absorber B being in the condition in which it has been heated prior to the regeneration process, absorber C being in the condition in which it is to be regenerated, and the gas to be treated being passed through absorber A, wherein
a) a split stream of the gas to be treated is first passed through absorber B and the gas stream discharged from absorber B is heated and passed through the absorber C to be regenerated, whereupon the gas stream which is discharged from absorber C and which is enriched with desorbate is cooled, condensing organic compounds are separated, and the residual gas stream containing non-condensing constitutents is passed through absorber A, or
b) a split stream of the gas to be treated is first heated and passed through absorber C, whereupon the gas stream which is discharged from absorber C and which is enriched with desorbate is cooled, condensing organic constituents are separated, the gas stream containing non-condensing constituents is passed through absorber B, and the gas stream discharged from absorber B is admixed to the gas to be treated for passing it then through absorber A, or
c) a split stream of the gas to be treated is heated and passed through absorber C, whereupon the gas stream which is discharged from absorber C and which is enriched with desorbate is cooled, condensing organic compounds are separated and the residual gas stream is admixed to the gas to be treated for passing it then through absorber A, and a split stream of the gas discharged from adsorber A is passed through absorber B, whereupon the gas stream discharged from absorber B is admixed to the main stream of the gas to be treated.

## Revendications

1. Procédé pour la sorption simultanée d'eau et de composés organiques à partir de gaz de processus industriels issus de la synthèse de l'anhydride maléique, de la synthèse de l'anhydride téréphtalique ou de la synthèse de l'anhydride phtalique, dans lequel on met le gaz en contact avec un agent de sorption englobant du charbon actif particulaire dans un support oxydé et dans lequel le support a été préparé à partir d'un gel.

2. Procédé selon la revendication 1, caractérisé en ce que le charbon actif est présent sous forme de particules possédant une granulométrie de 50 à 10.000 nm.

3. Procédé selon la revendication 1 ou 2, caractérisé en ce que le charbon actif est contenu dans l'agent de sorption en une quantité de 0,5 à 70% en poids, de préférence de 5 à 40% en poids rapportés au poids total de l'agent de sorption.

4. Procédé selon l'une quelconque des revendications précédentes, caractérisé en ce que le support est constitué de dioxyde de silicium amorphe et est de préférence réalisé sous forme de perles.

5. Procédé selon l'une quelconque des revendications précédentes, caractérisé en ce que, pour la séparation simultanée d'eau et d'hydrocarbures en C₅ et plus, on met l'agent de sorption en contact avec le gaz à traiter ou l'agent de sorption avec le courant de gaz à traiter pendant un laps de temps d'au moins 20 minutes.

6. Procédé selon la revendication 5, caractérisé en ce qu'on travaille sous une pression de 0,1 à 15 MPa (de 1 à 150 bar).

7. Procédé selon la revendication 5 ou 6, caractérisé en ce qu'on procède à la sorption à une température de 0 à 50°C et à une régénération à une température de 100 à 350°C.

8. Procédé selon la revendication 7, caractérisé en ce qu'on effectue la régénération en faisant passer un gaz de régénération chauffé à une température de 150 à 300°C, dans lequel, en ce qui concerne le gaz de régénération, il s'agit d'un courant partiel du gaz à traiter qui est chargé lors de la régénération avec le produit de la désorption, on libère du produit de désorption le gaz de régénération chargé avec le produit de désorption dans des conditions de refroidissement par condensation et on ajoute par mélange au gaz à traiter ou au gaz traité le gaz de régénération libéré du produit de désorption.

9. Procédé selon l'une quelconque des revendications 1 à 4, caractérisé en ce que, pour la séparation simultanée d'eau et d'hydrocarbures en C₂ et plus, on met l'agent de sorption en contact avec le gaz ou l'agent de sorption avec le courant de gaz à traiter pendant un laps de temps maximal de 15 minutes.

10. Procédé selon la revendication 9, caractérisé en ce qu'on procède à la sorption à une température de 0 à 50°C et à la désorption à une température de 0 à 50°C.

11. Procédé selon la revendication 10, caractérisé en ce qu'on procède à la sorption sous une pression de 0,1 à 10 MPa (de 1 à 100 bar) et à la désorption sous une pression de 10 kPa à 1 MPa (de 0,1 à 10 bar).

12. Procédé selon l'une quelconque des revendications 7 à 11, caractérisé en ce qu'on guide le gaz de régénération en circuit fermé.

13. Procédé selon l'une quelconque des revendications 7 à 11, caractérisé en ce qu'on guide le gaz de régénération en dérivation.

14. Procédé selon l'une quelconque des revendications 7 à 11, caractérisé en ce qu'on prévoit au moins trois absorbeurs A, B et C, dans lequel l'absorbeur A se trouve dans le cycle d'absorption, l'absorbeur B se trouve à l'état chauffé par la régénération, l'absorbeur C doit être régénéré et on guide le gaz à traiter à travers l'absorbeur A, dans lequel, soit
a) on guide un courant partiel du gaz à traiter d'abord à travers l'absorbeur B, on chauffe le courant de gaz quittant l'absorbeur B et on le guide à travers l'absorbeur C qui doit être régénéré, puis on refroidit le courant de gaz quittant l'absorbeur C, qui est enrichi avec le produit de la désorption, on sépare les composés organiques éliminés par condensation et on guide à travers l'absorbeur A le courant de gaz résiduel présentant des constituants inaptes à la condensation, soit
b) on chauffe d'abord un courant partiel du gaz à traiter et on le guide à travers l'absorbeur C, puis on refroidit le courant de gaz quittant l'absorbeur C, qui est enrichi avec le produit de la désorption, on sépare les constituants organiques éliminés par condensation, on guide à travers l'absorbeur B le courant de gaz présentant des constituants inaptes à la condensation et on ajoute par mélange le courant de gaz quittant l'absorbeur B au gaz à traiter à des fins de guidage à travers l'absorbeur A, ou encore
c) on chauffe un courant partiel du gaz à traiter et on le guide à travers l'absorbeur C, on refroidit le courant de gaz quittant l'absorbeur C, enrichi avec le produit de la désorption, on sépare les composés organiques éliminés par condensation et on ajoute par mélange le courant de gaz résiduel au gaz à traiter à des fins de guidage à travers l'absorbeur A, on guide à travers l'absorbeur B un courant partiel du gaz quittant l'absorbeur A et on ajoute par mélange au courant principal du gaz traité, le courant de gaz quittant l'absorbeur B.
